# EUROPÄISCHE PATENTANMELDUNG

(11) **EP 3 872 661 A1**
(43) Veröffentlichungstag der Anmeldung: **01.09.2021**
(21) Anmeldenummer: 20159204.5
(22) Anmeldetag: 25.02.2020
(51) Int. Cl.: G06F 21/53, G06F 9/48

(54) **ANALYSE EINER CONTAINER-INSTANZ EINES BETRIEBSSYSTEMS**

(71) Anmelder: Siemens Aktiengesellschaft, 80333 München (DE)
(72) Erfinder: Knierim, Christian, 81373 München (DE)

(57) **Zusammenfassung**

Die Erfindung gibt ein automatisiertes Verfahren zur Analyse einer Container-Instanz (3) eines Betriebssystems eines Hostsystems (2) an, wobei die Container-Instanz (3) auf einer Laufzeitumgebung gestartet ist. Das Verfahren weist die folgenden Schritte auf:
- Erfassen eines initialen Referenzbilds (S1) der Container-Instanz (3), wobei das initiale Referenzbild ein Abbild der Container-Instanz (3) ist,
- Übermitteln des initialen Referenzbilds (S2) an ein Prüfsystem (4), wobei das Prüfsystem (4) außerhalb des Hostsystems (2) angeordnet ist,
- Erfassen von Daten (S3), wobei das Erfassen getriggert durch ein Eintreten eines Ereignisses durchgeführt wird und wobei sich die Daten auf eine Operation auf der Container-Instanz (3) beziehen,
- Übertragen der Daten (S4) an das Prüfsystem (4),
- Erstellen eines aktualisierten Referenzbilds (S5) der Container-Instanz (3), wobei das aktualisierte Referenzbild durch Anpassen des initialen Referenzbilds bezüglich Effekten, die die Operationen auf der Container-Instanz (3) haben, erstellt wird, und
- Analysieren des aktualisierten Referenzbilds (S6) durch das Prüfsystem (4).

Außerdem gibt die Erfindung ein System (1) an, welches das genannte Verfahren ausführen kann.

## Beschreibung

### HINTERGRUND DER ERFINDUNG

### Gebiet der Erfindung

Die vorliegende Erfindung betrifft ein automatisiertes Verfahren zur Analyse einer Container-Instanz eines Betriebssystems und ein zugehöriges System, welches das Verfahren ausführen kann.

### Beschreibung des Stands der Technik

Da industrielle Systeme (Steuergeräte, Industrie PCs, IoT- und Edge-Geräte, Cloud-Server) oft über einen langen Zeitraum (10-20 Jahre, teilweise auch 30 oder 40 Jahre) im Feld verwendet werden, sind sie ständig ändernden Voraussetzungen und einem dynamischen Umfeld ausgesetzt.

Um mit diesen Umständen umzugehen, werden vor allem neue Geräte so entwickelt, dass sie über die Nutzungszeit flexibel angepasst werden können. Das kann z.B. durch die Unterstützung von nachladbaren Applikationen/Anwendungen/Anwendungsprogrammen mittels Containervirtualisierung/Container-Technologien erreicht werden.

Containervirtualisierung (oder: Containierisierung) ist eine Methode, um mehrere Instanzen (z.B. Anwendungsprogramme), die Container-Instanzen, eines Betriebssystems (als sog. "Gäste" oder Clients) isoliert voneinander auf einem Hostsystem/Hostrechner zu betreiben. Durch Containierisierung ist eine Trennung und Verwaltung der auf dem Hostsystem/Hostrechner genutzten Ressourcen möglich. So lässt sich verwalten, welche Systemressourcen den Prozessen in welcher Container-Instanz zugewiesen werden.

Als Hostsystem oder Hostrechner wird ein in ein Rechnernetz eingebundener Computer mit zugehörigem Betriebssystem bezeichnet, der Clients (z.B. Container-Instanzen) bedient oder Server beherbergt (also Dienste bereitstellt).

Container-Instanzen können auf unterschiedlichen Laufzeitumgebungen betrieben werden.

Eine Laufzeitumgebung oder auch Ausführungsumgebung ist ganz allgemein ein Anwendungsrahmenwerk oder eine Bibliothek, die ausführbare Anwendungen/Anwendungsprogramme, wie zum Beispiel Apps, Komponenten, Webseiten zur Laufzeit mit der für ihre Ausführung benötigten Funktionalität versorgt.

Durch eine Laufzeitumgebung können Anwendungen/Anwendungsprogramme in "ungewohnter" Umgebung lauffähig gemacht werden, indem die Laufzeitumgebung zwischen dem Anwendungsprogramm und Betriebssystem vermittelt.

Betriebssysteme sind heute sehr vielschichtig aufgebaut. Wenn Anwendungen möglichst schnell und einfach unter mehreren Betriebssystemen laufen sollen, empfiehlt es sich, für diese Anwendungen eigene kleine "Betriebssysteme" als Laufzeitumgebungen zu implementieren. Das erspart den Aufwand, jede einzelne Anwendung separat an das jeweilige Betriebssystem anzupassen.

Eine Laufzeitumgebung lädt die entsprechende Anwendung und führt sie auf ihrer Plattform aus, für welche die Laufzeitumgebung letztlich erstellt wurde. Das heißt: Auf diese Weise wird sie selbst zu einer kleinen "Plattform", auf der die Programme/Anwendungen aufsetzen können.

Container-Instanzen, welche auf Laufzeitumgebungen gestartet sind, können Schwachstellen enthalten, die rechtzeitig erkannt und behoben werden müssen, damit diese nicht von Angreifern ausgenutzt werden können. Um Schwachstellen zu erkennen, werden die Images der Container-Instanz (Bilder/Abbilder der Container-Instanz, auch als Container-Image bezeichenbar) oder die laufenden Container-Instanzen gescannt.

Hierbei sind zwei Fälle zu unterscheiden:
Fall 1: Eine Erkennung von Schwachstellen im Container-Image (Bild der Container-Instanz) durch einen periodischen Scan der Registry. Hierbei wird ein regelmäßiges Scannen von Container-Images durchgeführt. Dies hat den Nachteil, dass nicht die gestartete Container-Instanz untersucht wird und so Änderungen, die sich auf der Container-Instanz während der Laufzeit ergeben, nicht berücksichtigt/erkannt werden können.
Fall 2: Eine Erkennung von Schwachstellen in gestarteten Container-Instanzen auf der Laufzeitumgebung. Dies kann zum eine über privilegierte Container-Instanz durchgeführt werden, welche von Security Herstellern zur Verfügung gestellt werden und die Container-Instanzen auf der Laufzeitumgebung regelmäßig untersuchen. Dies hat den Nachteil, dass eine privilegierte Container-Instanz bereitgestellt werden muss. Dies hat außerdem den Nachteil, dass die optimalen Zeitpunkte der Untersuchung durch die privilegierte Container-Instanz nicht bekannt sind und so möglicherweise zu oft oder zu selten untersucht wird und so Schwachstellen nicht rechtzeitig erkannt werden können.

Außerdem gibt es die Möglichkeit, Container-Images auf der Laufzeitumgebung zu scannen und von einer Kontrolleinheit überprüfen zu lassen. Dies hat den Nachteil, dass nur beim (Neu-)Start neuer Container-Instanzen ein Scan und eine Überprüfung durchgeführt wird und keine regelmäßigen Scan-Intervalle vorgesehen sind.

Die Aufgabe der Erfindung besteht darin, eine verbesserte Lösung bereitzustellen, um gestartete/laufende Container-Instanzen zu analysieren und zu prüfen, insbesondere um die Sicherheit bezüglich unerwünschter Operationen auf der Container-Instanz zu erhöhen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Die Erfindung beansprucht ein automatisiertes Verfahren zur Analyse einer Container-Instanz eines Betriebssystems eines Hostsystems, wobei die Container-Instanz auf einer Laufzeitumgebung gestartet ist, aufweisend die Schritte:
- Erfassen eines initialen Referenzbilds der Container-Instanz, wobei das initiale Referenzbild ein Abbild der Container-Instanz ist,
- Übermitteln des initialen Referenzbilds an ein Prüfsystem, wobei das Prüfsystem (4) außerhalb des Hostsystems (2) angeordnet ist,
- Erfassen von Daten, wobei das Erfassen getriggert durch ein Eintreten eines Ereignisses durchgeführt wird und wobei sich das Ereignis sowie die Daten auf Operationen auf der Container-Instanz beziehen,
- Übertragen der Daten an das Prüfsystem,
- Erstellen eines aktualisierten Referenzbilds der Container-Instanz, wobei das aktualisierte Referenzbild durch Anpassen des initialen Referenzbilds bezüglich Effekten, die die Operationen auf der Container-Instanz haben, erstellt wird, und
- Analysieren des aktualisierten Referenzbilds durch das Prüfsystem.

Ein Aspekt der Erfindung besteht darin, den Stand der Technik dahingehend zu verbessern, dass die Analyse des Container-Images der Container-Instanz bzw. des aktualisierten Referenzbilds der Container-Instanz eventbasiert, d.h. getriggert durch ein vorhergehendes Eintreten eines Ereignisses/Events, das sich auf Operationen auf der Container-Instanz bezieht, durchgeführt wird.

Unter Container-Instanz wird im Rahmen der Erfindung eine isolierte Instanz eines darunterliegenden Betriebssystems verstanden, die isoliert von anderen Instanzen auf einem Hostsystem/Hostrechner betrieben wird und im gleichen Prozessraum wie das Betriebssystem selbst läuft. Container-Instanzen werden für sich separat verwaltet und bekommen separat Systemressourcen des darunterliegenden Betriebssystems zugewiesen. Die Isolierung der Container-Instanz gegenüber anderen Instanzen wird mit Hilfe von Bordmitteln des darunterliegenden Betriebssystems erreicht.

Unter einer Laufzeitumgebung wird im Rahmen dieser Patentanmeldung ein Anwendungsrahmenwerk, d.h. die verfügbaren und festgelegten Voraussetzungen des Laufzeitsystems, verstanden, das Container-Instanzen zur Laufzeit mit der für ihre Ausführung benötigten Funktionalität versorgt.

Dass die Container-Instanz gestartet ist, bedeutet, dass die Container-Instanz läuft bzw. in Laufzeit befindet. Die Container-Instanz ist in einer Laufzeitumgebung gestartet bzw. läuft in einer Laufzeitumgebung.

Das Referenzbild ist ein Abbild der Container-Instanz und kann auch als Klon der Container-Instanz bezeichnet werden.

Das Analysieren des aktualisierten Referenzbilds durch das Prüfsystem kann auch als Überprüfen oder Prüfen des aktuellen Zustands der Container-Instanz bezeichnet werden.

Aussagen über Schwachstellen von laufenden Container-Instanzen können getroffen werden, indem bei einem Start der Container-Instanz ein in einer Registry/einem Register hinterlegtes Container-Image als initiales Referenzbild der Container-Instanz verwendet wird und ständig mit der laufenden Container-Instanz abgeglichen wird. Dies kann initial über eine Image-ID (Identifikation des Container-Image) des initialen Container-Image und die Instanz-ID (Identifikation der Container-Instanz) durchgeführt werden, welche ständig auf dem Hostsystem (z.B. über Bordmittel, d.h. über eigene Mittel der Container-Instanz Laufzeitumgebung oder Security-Tools) abgefragt werden kann.

Während der Laufzeit der Container-Instanz können sich durch Operationen auf der Container-Instanz Änderungen ergeben. Die Änderungen können sich zum Beispiel auf einem Dateisystem der Container-Instanz und durch zum Beispiel Operationen wie Nachinstallieren von Software oder anderen Schreiboperationen ergeben. Deshalb ist es erforderlich, dass bei einem Eintreten eines Ereignisses, das sich auf eine Operation auf der Container-Instanz Daten bezieht bzw. ein Ereignis, dass eine Operation auf der Container-Instanz darstellt, zu dieser Operation auf der Container-Instanz sämtliche relevante Daten mitprotokolliert werden/erfasst werden. Anschließend sollen die Daten zum Beispiel bei Eintreten eines weiteren/anderen Ereignisses und/oder zu einem definierten Zeitpunkt zu einem Prüfsystem übertragen werden.

Eine Übertragung zu dem Prüfsystem, welches die Container-Instanz überprüfen soll, kann beispielsweise integritätsgesichert, d.h. unter Verhinderung unautorisierter Modifikation von Information und Daten, erfolgen. Eine integritätsgesicherte Übertragung zu dem Prüfsystem kann beispielsweise über MTLS (Mutual Transport Layer Security) erfolgen.

Das Prüfsystem soll das initiale Referenzbild dann anhand der Operationen auf der Container-Instanz d.h anhand der Daten aktualisieren und ein aktualisiertes Referenzbild erstellen. Dadurch wird ein aktualisiertes Referenzbild bereitgestellt. Das Prüfsystem analysiert und überprüft das aktualisierte Referenzbild anschließend zum Beispiel bezüglich Schwachstellen.

Operationen auf der Container-Instanz mitsamt Inhalt werden bei dem Eintreten eines Ereignisses in Form von Daten erfasst und können beispielsweise über eBPF-Probes (extended Berklee Packet Filter) oder darauf basierende Programme auf dem darunterliegenden Hostsystem eventbasiert (d.h. direkt zum Zeitpunkt des Ereignisses) ausgelesen werden und an das Prüfsystem, welches das aktualisierte Referenzbild überprüfen/analysieren soll, übertragen/übermittelt werden. Alternativ können die Daten zu einem späteren Zeitpunkt ausgelesen und an das Prüfsystem übertragen/übermittelt werden.

Die Überprüfung der laufenden Container-Instanz wird somit durchgeführt, indem die - wie oben beschrieben - ermittelten Operationen bzw. Daten, welche sich auf die Operationen beziehen, auf das initiale Referenzbild der Container-Instanz angewandt werden, ein aktualisiertes Referenzbild der Container-Instanz erstellt wird und eine Analyse, zum Beispiel ein Schwachstellenscan, des aktualisierten Referenzbilds durchgeführt wird.

Laufende Container-Instanzen können somit eventbasiert getriggert durch das Eintreten eines Ereignisses (z.B. über einen definierten Trigger oder eine definierte Änderungsoperationen) gescannt/analysiert werden und müssen nicht (nur) über feste Intervalle gescannt/analysiert werden. Dies hat den Vorteil, dass Schwachstellen schneller erkannt werden können und nicht erst zu einem nächsten festen Zeitpunkt eines Intervalls erkannt werden.

Das Prüfsystem ist außerhalb des Hostsystems, auf dem die Container-Instanz betrieben wird, angeordnet.

Ein Prüfsystem außerhalb der Container-Instanz und außerhalb des Hostsystems hat den Vorteil, dass kein Agent/Prüfsystem in der Container-Instanz auf der Laufzeitumgebung erforderlich ist. Das hat den Vorteil, dass das Analysieren/die Prüfung durch das Prüfsystem nicht auf dem Hostsystem selbst stattfindet und somit dort keine Ressourcen erforderlich sind bzw. verbraucht werden.

Die Verwendung eines Prüfsystems außerhalb des Hostsystems hat außerdem den Vorteil, dass für das Analysieren des aktualisierten Referenzbilds und ein mögliches Identifizieren von Schwachstellen der Container-Instanz keine privilegierten Prüf-Instanzen auf dem Laufzeitsystem/in der Laufzeitumgebung erforderlich sind, welche weitere Container-Instanzen überprüfen. Das hat den Vorteil, dass das Prüfsystem unabhängig von dem Betriebssystem/Hostsystem und der Container-Instanz verwaltet werden kann. Außerdem hat es den Vorteil, dass über in die Container-Instanz eingeschleuste Schadsoftware nicht kompromittiert werden kann

In einer weiteren Ausführungsform der Erfindung erfolgt das Erfassen des initialen Referenzbilds der Container-Instanz durch eine Abfrage auf dem Betriebssystem, zum Beispiel über Bordmittel (d.h. über eigene Mittel) der Container-Instanz Laufzeitumgebung und/oder Security-Tools. Das hat den Vorteil, dass ein initiales Referenzbild der Container-Instanz zur Verfügung gestellt wird.

Spätere Änderungen auf der Container-Instanz zum Beispiel durch Operationen auf der Container-Instanz werden inkusiv Inhalt bei dem Eintreten eines Ereignisses in Form von Daten erfasst und können beispielsweise über eBPF-Probes (extended Berklee Packet Filter) oder darauf basierende Programme auf dem darunterliegenden Hostsystem eventbasiert (d.h. direkt zum Zeitpunkt des Ereignisses) ausgelesen werden und an das Prüfsystem, welches das aktualisierte Referenzbild überprüfen/analysieren soll, übertragen/übermittelt werden.

In einer weiteren Ausführungsform der Erfindung umfasst das Ereignis und/oder die Operation eine Schreiboperation auf der Container-Instanz.

In einer weiteren Ausführungsform der Erfindung umfassen das Ereignis und/oder die Operation Änderungen auf der Container-Instanz, Änderungen eines Dateisystems der Container-Instanz, System Calls, Modifikationen und/oder Anlegen von Dateien und/oder Verzeichnissen, Installationsvorgänge auf der Container-Instanz, Änderungen von Berechtigungen auf der Container-Instanz und/oder Änderungen von Dateien auf der Container-Instanz.

In einer weiteren Ausführungsform der Erfindung können das Ereignis und die Operation unterschiedlich ausgeprägt sein.

Das Erfassen von Daten erfolgt somit bei einem Eintreten eines Ereignisses und die Daten beziehen sich auf eine Operation auf der Container-Instanz, wobei das Ereignis, zu dem das Erfassen von Daten erfolgt und die Operation, auf die sich die Daten bezieht auf dieselbe Weise oder unterschiedlich ausgebildet sein können. So kann zum Beispiel eine bestimmte Schreiboperation auf der Container-Instanz das auslösende Ereignis sein, zu dem das Erfassen von Daten stattfindet und gleichzeitig können sich die Daten auf die bestimmte Schreiboperation beziehen. Alternativ können bei einem auslösendem Ereignis Daten erhoben werden, die sich auf eine andere Operation auf der Container-Instanz beziehen als die Operation, auf welche sich die Daten beziehen.

In einer weiteren Ausführungsform der Erfindung ist der Zeitpunkt des Übertragens der Daten an das Prüfsystem nicht direkt nach dem Erfassen der Daten, sondern mit zeitlichem Abstand nach dem Eintreten des Ereignisses festgelegt.

Der definierte Zeitpunkt kann beispielsweise in Abhängigkeit eines definierbaren zyklischen Zeitpunkts festgelegt werden und/oder in Abhängigkeit von verfügbaren Speicherkapazitäten einer für die Daten vorgesehenen Speichereinheit festgelegt werden.

Es kann somit zum Beispiel nachdem ein bestimmtes Speichervolumen/Speicherkapazität belegt ist (definierter Zeitpunkt) zum nächsten festgelegten zyklischen Zeitpunkt einer zeitlichen Abfolge (zum Beispiel alle 5 Minuten) ein Übertragen der Daten an das Prüfsystem durchgeführt werden.

In einer weiteren Ausführungsform der Erfindung ist der Zeitpunkt des Übertragens der Daten unabhängig vom Zeitpunkt des Ereignisses festgelegt. Der Zeitpunkt kann Teil einer periodischen zeitlichen Abfolge sein. So kann das Übertragen der Daten an das Prüfsystem und das anschließende Erstellen des aktualisierten Referenzbildes und das Analysieren des aktualisierten Referenzbildes zum Beispiel alle 5 Minuten durchgeführt werden. In diesem Fall findet das Übertragen der Daten an das Prüfsystem nicht eventbasiert statt, das Erfassen der Daten findet aber weiterhin eventbasiert (d.h. getriggert durch Eintreten eines Ereignisses) statt.

In einer weiteren Ausführungsform der Erfindung ist der Zeitpunkt des Übertragens der Daten in Abhängigkeit einer verfügbaren Speicherkapazität einer für die Daten vorgesehenen Speichereinheit festgelegt. Diese Option ist mit der zuvor genannten Ausführungsformen des definierten Zeitpunkts, welcher in Abhängigkeit von einem Eintreten eines definierbaren zyklischen Zeitpunkts festgelegt ist, kombinierbar.

In einer weiteren Ausführungsform der Erfindung ist das Übertragen der Daten an das Prüfsystem integritätsgesichert z.B. über MTLS (Mutual Transport Layer Security) durchführbar.

In einer weiteren Ausführungsform der Erfindung ist das Analysieren des aktualisierten Referenzbilds darauf ausgerichtet, Schwachstellen der Container-Instanz zu identifizieren. Identifizierte Schwachstellen der Container-Instanz können anschließend behandelt und/oder beseitigt werden.

In einer weiteren Ausführungsform der Erfindung wird, abhängig von einem Inputparameter, bei dem Erstellen des aktualisierten Referenzbilds der Container-Instanz eine Operation, die ein Hinzufügen eines zusätzlichen Dateisystems zu der Container-Instanz darstellt, nicht berücksichtigt.

Der Inputparameter kann durch eine Eingabe eines Benutzers bereitgestellt werden. Ein zusätzliches Dateisystem kann durch eine zusätzlich verbundene Speichereinheit, wie eine Hardwareeinheit oder ein zusätzlich verbundenes Netzwerklaufwerk geschaffen werden.

Diese Ausführungsform hat den Vorteil und technischen Effekt einer erhöhten Flexibilität des Einsatzes des Prüfsystems. Eine verbindliche Prüfung eines zusätzlich verbundenen Netzwerklaufwerks kann eine hohe Komplexität haben und somit optional erfolgen. Das zusätzlich verbundene Netzwerklaufwerk kann in Abhängigkeit von einer Eingabe eines Benutzers oder einem berechneten Inputparameter (zum Beispiel berechnet auf Basis von Effizienzparametern) berücksichtigt werden oder nicht berücksichtigt werden. Im Falle einer Nicht-Berücksichtigung kann die Komplexität des Analysierens durch das Prüfsystem geringer gehalten werden.

In einer weiteren Ausführungsform der Erfindung werden die Daten vor dem Übertragen an das Prüfsystem zwischengespeichert.

Neben dem direkten Übertragen der Daten an das Prüfsystem ist eine alternative Variante denkbar, bei der die Daten nicht sofort zum Prüfsystem übertragen werden, sondern auf einem lokalen Zwischenspeicher des darunterliegenden Hostsystems/Betriebssystem zwischenspeichert und erst zum Beispiel bei einem definierten Füllgrad des lokalen Zwischenspeichers, einem über die oben beschriebene Richtline hinterlegten Event/ Eintreten eines definierbaren zweiten Ereignisses (wie Änderungen auf der Container-Instanz, Änderungen eines Dateisystems der Container-Instanz, Schreiboperationen auf der Container-Instanz, System Calls, Modifikationen und/oder Anlegen von Dateien und/oder Verzeichnissen, Installationsvorgänge auf der Container-Instanz, Änderungen von Berechtigungen auf der Container-Instanz und/oder Änderungen von Dateien auf der Container-Instanz) oder nach Ablauf eines Intervalls an das Prüfsystem übertragen werden.

Außerdem können so zum Beispiel in dem Fall, dass das Prüfsystem für mehrere Intervalle nicht erreichbar ist, Daten, die noch nicht an das Prüfsystem übertragen wurden, gesammelt werden und zu einem späteren Zeitpunkt gesammelt übertragen werden.

Die Erfindung beansprucht außerdem ein System aufweisend:
- eine Container-Instanz eines Betriebssystems eines Hostsystems, wobei die Container-Instanz auf einer Laufzeitumgebung gestartet ist,
- ein Prüfsystem, wobei das Prüfsystem (4) außerhalb des Hostsystems (2) angeordnet ist,
- eine erste Erfassungseinheit, wobei die erste Erfassungseinheit ausgebildet ist, ein initiales Referenzbild der Container-Instanz erfassen zu können und wobei das initiale Referenzbild ein Abbild der Container-Instanz ist,
- eine Übermittlungseinheit, wobei die Übermittlungseinheit ausgebildet ist, das initiale Referenzbild an ein Prüfsystem übermitteln zu können,
- eine zweite Erfassungseinheit, wobei die zweite Erfassungseinheit ausgebildet ist, getriggert durch ein Eintreten eines Ereignisses Daten erfassen zu können, wobei sich das Ereignis sowie die Daten auf eine Operation auf der Container-Instanz beziehen,
- eine Übertragungseinheit, wobei die Übertragungseinheit ausgebildet ist, die Daten an das Prüfsystem übertragen zu können, und
- eine Aktualisierungseinheit, wobei die Aktualisierungseinheit ausgebildet ist, ein aktualisiertes Referenzbild der Container-Instanz erstellen zu können, wobei das aktualisierte Referenzbild durch Anpassen des initialen Referenzbilds bezüglich Effekten, die die Operation auf der Container-Instanz hat, erstellbar ist, und
wobei das Prüfsystem außerdem ausgebildet ist, das aktualisierte Referenzbild analysieren zu können.

In einer weiteren Ausführungsform der Erfindung ist das erfindungsgemäße System ausgebildet, das erfindungsgemäße Verfahren durchführen zu können.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein Ablaufdiagramm des erfindungsgemäßen Verfahrens und
- Fig. 2: ein erfindungsgemäßes System.

### DETAILLIERTE BESCHREIBUNG DER ERFINDUNG

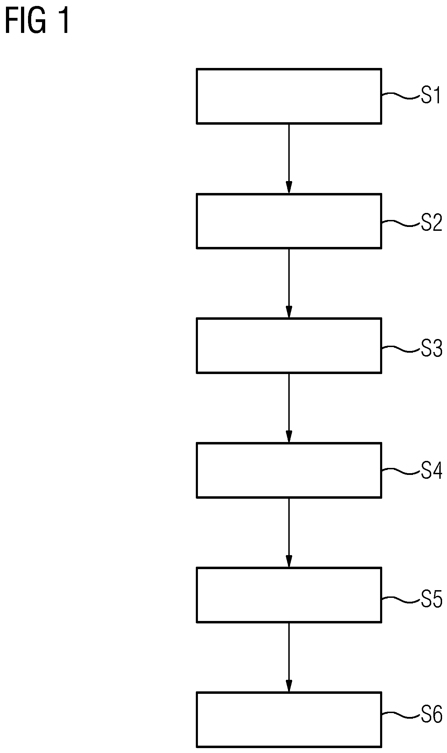

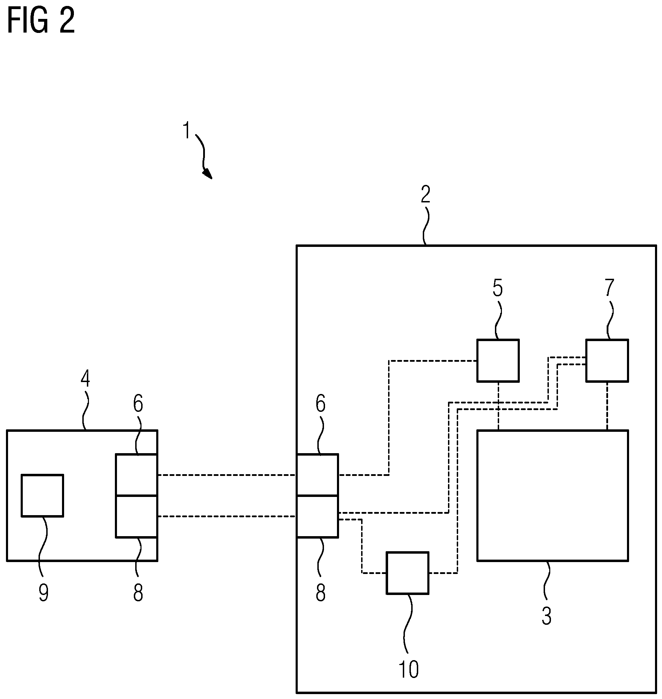

Fig. 1 zeigt ein Ablaufdiagramm des erfindungsgemäßen Verfahrens zur Analyse einer Container-Instanz (3, siehe Fig. 2) eines Betriebssystems eines Hostsystems (2, siehe Fig. 2), wobei die Container-Instanz (3) auf einer Laufzeitumgebung gestartet ist.

Fig. 1 zeigt die folgenden Schritte:
- Schritt S1: Erfassen eines initialen Referenzbilds der Container-Instanz (3), wobei das initiale Referenzbild ein Abbild der Container-Instanz (3) ist,
- Schritt S2: Übermitteln des initialen Referenzbilds an ein Prüfsystem (4, siehe Fig. 2),
- Schritt S3: Erfassen von Daten, wobei das Erfassen getriggert durch ein Eintreten eines Ereignisses durchgeführt wird und wobei sich das Ereignis sowie die Daten auf eine Operation auf der Container-Instanz (3) beziehen,
- Schritt S4: Übertragen der Daten an das Prüfsystem (4), wobei das Prüfsystem (4) außerhalb des Hostsystems (2) angeordnet ist,
- Schritt S5: Erstellen eines aktualisierten Referenzbilds der Container-Instanz (3), wobei das aktualisierte Referenzbild durch Anpassen des initialen Referenzbilds bezüglich Effekten, die die Operationen auf der Container-Instanz (3) haben, erstellt wird, und
- Schritt S6: Analysieren des aktualisierten Referenzbilds durch das Prüfsystem (4).

Schritt S1, das Erfassen des initialen Referenzbilds (S1) der Container-Instanz (3), kann durch eine Abfrage auf dem Betriebssystem (2) erfolgen. Dies kann initial über eine Image-ID (Identifikation des Container-Image) des initialen Container-Image und die Instanz-ID (Identifikation der Container-Instanz) durchgeführt werden, welche ständig auf dem Hostsystem (z.B. über Bordmittel, d.h. über eigene Mittel der Container-Instanz Laufzeitumgebung oder Security-Tools) abgefragt werden kann.

Schritt S4, das Übertragen der Daten an das Prüfsystem (S4), ist integritätsgesichert, z.B. über MTLS (Mutual Transport Layer Security), durchführbar.

Schritt S6, das Analysieren des aktualisierten Referenzbilds (S6), ist insbesondere darauf ausgerichtet, Schwachstellen der Container-Instanz (3) zu identifizieren.

Bei Schritt S5, dem Erstellen des aktualisierten Referenzbilds (S1) der Container-Instanz (3), können, abhängig von einem Inputparameter, Operationen, die ein Hinzufügen eines zusätzlichen Dateisystems zu der Container-Instanz (3) darstellen, nicht berücksichtigt werden.

Die Daten können vor Schritt S4, dem Übertragen (S4) an das Prüfsystem (4), zwischengespeichert werden.

Fig. 2 zeigt eine schematische Darstellung eines erfindungsgemäßen Systems (1).

Fig. 2 zeigt eine Container-Instanz (3) eines Betriebssystems eines Hostsystems (2), wobei die Container-Instanz (3) auf einer Laufzeitumgebung gestartet ist.

Fig. 2 zeigt außerdem ein Prüfsystem (4), wobei das Prüfsystem (4) außerdem ausgebildet ist, ein später erstelltes aktualisiertes Referenzbild analysieren zu können und wobei das Prüfsystem (4) außerhalb des Hostsystems (2) angeordnet ist.

Fig. 2 zeigt außerdem eine erste Erfassungseinheit (5), wobei die erste Erfassungseinheit (5) ausgebildet ist, ein initiales Referenzbild der Container-Instanz (3) zu erfassen und wobei das initiale Referenzbild ein Abbild der Container-Instanz (3) ist.

Fig. 2 zeigt außerdem eine Übermittlungseinheit (6), wobei die Übermittlungseinheit (6) ausgebildet ist, das initiale Referenzbild an das Prüfsystem (4) übermitteln zu können.

Fig. 2 zeigt außerdem eine zweite Erfassungseinheit (7), wobei die zweite Erfassungseinheit (7) ausgebildet ist, getriggert durch ein Eintreten eines Ereignisses Daten erfassen zu können, wobei sich das Ereignis sowie die Daten auf eine Operation auf der Container-Instanz (3) beziehen.

Fig. 2 zeigt außerdem eine Übertragungseinheit (8), wobei die Übertragungseinheit (8) ausgebildet ist, die Daten an das Prüfsystem (4) übertragen zu können.

Fig. 2 zeigt außerdem eine Aktualisierungseinheit (9), wobei die Aktualisierungseinheit (9) ausgebildet ist, das aktualisierte Referenzbild der Container-Instanz (3) erstellen zu können, wobei das aktualisierte Referenzbild durch Anpassen des initialen Referenzbilds bezüglich Effekten, die die Operation auf der Container-Instanz (3) hat, erstellbar ist.

Das Prüfsystem (4) kann außerhalb der Container-Instanz (3) und außerhalb des Hostsystems (2) angeordnet sein.

Das Ereignis und/oder die Operationen können Änderungen auf der Container-Instanz (3), Änderungen eines Dateisystems der Container-Instanz (3), Schreiboperationen auf der Container-Instanz (3), System Calls, Modifikationen und/oder Anlegen von Dateien und/oder Verzeichnissen, Installationsvorgänge auf der Container-Instanz (3), Änderungen von Berechtigungen auf der Container-Instanz (3) und/oder Änderungen von Dateien auf der Container-Instanz (3) umfassen.

Das Ereignis und die Operationen können unterschiedlich oder gleich ausgeprägt sein.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: System
- 2: Hostsystem
- 3: Container-Instanz
- 4: Prüfsystem
- 5: erste Erfassungseinheit
- 6: Übermittlungseinheit
- 7: zweite Erfassungseinheit
- 8: Übertragungseinheit
- 9: Aktualisierungseinheit
- 10: Speichereinheit

- S1: Erfassen eines initialen Referenzbilds
- S2: Übermitteln des initialen Referenzbilds
- S3: Erfassen von Daten
- S4: Übertragen der Daten
- S5: Erstellen eines aktualisierten Referenzbilds
- S6: Analysieren des aktualisierten Referenzbilds

## Patentansprüche

1. Automatisiertes Verfahren zur Analyse einer Container-Instanz (3) eines Betriebssystems eines Hostsystems (2), wobei die Container-Instanz (3) auf einer Laufzeitumgebung gestartet ist,
**aufweisend die Schritte:**
- Erfassen eines initialen Referenzbilds (S1) der Container-Instanz (3), wobei das initiale Referenzbild ein Abbild der Container-Instanz (3) ist,
- Übermitteln des initialen Referenzbilds (S2) an ein Prüfsystem (4),
- Erfassen von Daten (S3), wobei das Erfassen getriggert durch ein Eintreten eines Ereignisses durchgeführt wird und wobei sich das Ereignis sowie die Daten auf eine Operation auf der Container-Instanz (3) beziehen,
- Übertragen der Daten (S4) an das Prüfsystem (4), wobei das Prüfsystem (4) außerhalb des Hostsystems (2) angeordnet ist,
- Erstellen eines aktualisierten Referenzbilds (S5) der Container-Instanz (3), wobei das aktualisierte Referenzbild durch Anpassen des initialen Referenzbilds bezüglich Effekten, die die Operationen auf der Container-Instanz (3) haben, erstellt wird, und
- Analysieren des aktualisierten Referenzbilds (S6) durch das Prüfsystem (4).

2. Verfahren nach dem vorherigen Anspruch,
**dadurch gekennzeichnet,**
**dass** das Erfassen des initialen Referenzbilds (S1) der Container-Instanz (3) durch eine Abfrage auf dem Betriebssystem erfolgt.

3. Verfahren nach einem der vorherigen Ansprüche,
**dadurch gekennzeichnet,**
**dass** das Ereignis und/oder die Operation eine Schreiboperation auf der Container-Instanz (3) umfasst.

4. Verfahren nach einem der vorherigen Ansprüche,
**dadurch gekennzeichnet,**
**dass** das Ereignis und die Operation unterschiedlich ausgeprägt sind.

5. Verfahren nach einem der vorherigen Ansprüche,
**dadurch gekennzeichnet,**
**dass** der Zeitpunkt des Übertragens der Daten (S4) an das Prüfsystem (4) mit zeitlichem Abstand nach dem Eintreten des Ereignisses festgelegt ist.

6. Verfahren nach Anspruch 5,
**dadurch gekennzeichnet,**
**dass** der Zeitpunkt des Übertragens der Daten (S4) unabhängig vom Zeitpunkt des Ereignisses festgelegt ist.

7. Verfahren nach Anspruch 5 oder 6,
**dadurch gekennzeichnet,**
**dass** der Zeitpunkt des Übertragens der Daten (S4) in Abhängigkeit einer verfügbaren Speicherkapazität einer für die Daten vorgesehenen Speichereinheit (10) festgelegt ist.

8. Verfahren nach einem der vorherigen Ansprüche,
**dadurch gekennzeichnet,**
**dass** das Übertragen der Daten (S4) an das Prüfsystem (4) integritätsgesichert durchführbar ist.

9. Verfahren nach einem der vorherigen Ansprüche,
**dadurch gekennzeichnet,**
**dass** das Analysieren des aktualisierten Referenzbilds (S6) darauf ausgerichtet ist, Schwachstellen der Container-Instanz (3) zu identifizieren.

10. Verfahren nach einem der vorherigen Ansprüche,
**dadurch gekennzeichnet,**
**dass**, abhängig von einem Inputparameter, bei dem Erstellen des aktualisierten Referenzbilds (S1) der Container-Instanz (3) eine Operation, die ein Hinzufügen eines zusätzlichen Dateisystems zu der Container-Instanz (3) darstellt, nicht berücksichtigt wird.

11. Verfahren nach einem der vorherigen Ansprüche,
**dadurch gekennzeichnet,**
**dass** die Daten vor dem Übertragen (S4) an das Prüfsystem (4) zwischengespeichert werden.

12. System (1) aufweisend:
- eine Container-Instanz (3) eines Betriebssystems eines Hostsystems (2), wobei die Container-Instanz (3) auf einer Laufzeitumgebung gestartet ist,
- ein Prüfsystem (4), wobei das Prüfsystem (4) außerhalb des Hostsystems (2) angeordnet ist,
- eine erste Erfassungseinheit (5), wobei die erste Erfassungseinheit (5) ausgebildet ist, ein initiales Referenzbild der Container-Instanz (3) erfassen zu können, wobei das initiale Referenzbild ein Abbild der Container-Instanz (3) ist,
- eine Übermittlungseinheit (6), wobei die Übermittlungseinheit (6) ausgebildet ist, das initiale Referenzbild an ein Prüfsystem (4) übermitteln zu können,
- eine zweite Erfassungseinheit (7), wobei die zweite Erfassungseinheit (7) ausgebildet ist, getriggert durch ein Eintreten eines Ereignisses Daten erfassen zu können, wobei sich das Ereignis sowie die Daten auf eine Operation auf der Container-Instanz (3) beziehen,
- eine Übertragungseinheit (8), wobei die Übertragungseinheit (8) ausgebildet ist, die Daten an das Prüfsystem (4) übertragen zu können, und
- eine Aktualisierungseinheit (9), wobei die Aktualisierungseinheit (9) ausgebildet ist, ein aktualisiertes Referenzbild der Container-Instanz (3) erstellen zu können, wobei das aktualisierte Referenzbild durch Anpassen des initialen Referenzbilds bezüglich Effekten, die die Operation auf der Container-Instanz (3) hat, erstellbar ist, und wobei das Prüfsystem (4) außerdem ausgebildet ist, das aktualisierte Referenzbild analysieren zu können.

13. System nach Anspruch 12, wobei das System (1) ausgebildet ist, ein Verfahren nach einem der Ansprüche 1 bis 12 durchführen zu können.
